# EUROPÄISCHE PATENTANMELDUNG

(11) **EP 0 536 578 A2**
(43) Veröffentlichungstag der Anmeldung: **14.04.1993**
(21) Anmeldenummer: 92116104.8
(22) Anmeldetag: 21.09.1992
(51) Int. Cl.: H04M 1/02

(54) **Funktelefon**

(30) Priorität: 08.10.1991 DE 4133324
(71) Anmelder: SIEMENS AKTIENGESELLSCHAFT, D-80333 München (DE)
(72) Erfinder: Sparrer, Reinhard, W-8152 Feldkirchen (DE)

(57) **Zusammenfassung**

Die Erfindung bezieht sich auf ein Funktelefon mit in den Bedienhörer integrierter Hörmuschel und Sprechkapsel sowie Tastatur- und Anzeigenfeld und einer Antenne. Ein solches Funktelefon soll in seinem Aufbau möglichst klein, betriebssicher zu handhaben sein und hinsichtlich seiner Gestaltung die physiologischen Erfordernisse erfüllen.

Hierzu ist ein - bezogen auf die Längsachse - dreiteiliger Aufbau vorgesehen, mit einem die Hörmuschel aufnehmenden hohlzylindrischen Oberteil (1), einem in das Oberteil (1) teleskopartig einschiebbaren Mittelteil (3) mit integriertem Tastatur- und Anzeigenfeld (4, 5) und einem am Mittelteil (3) fixierten, die Sprechkapsel aufnehmenden Unterteil (6).

## Beschreibung

Die Erfindung bezieht sich auf ein Funktelefon mit in den Bedienhörer integrierter Hörmuschel und Sprechkapsel sowie Tastatur- und Anzeigenfeld und eine Antenne.

Ein solches Funktelefon wird beispielsweise als Handheld oder schnurloses Telefon verwendet. Dabei ist teilweise ein Bügel oder eine Klappe - meist der Mikrophonteil - angebracht, die bei Benutzung ausgeklappt werden. Ein solches ausklappbares Teil kann durch fehlerhaftes Handling leicht abbrechen oder beschädigt werden.

Der Erfindung liegt die Aufgabe zugrunde, ein Funktelefon zu schaffen, das unter Vermeidung solcher Gefahren und Erfüllung der physiologischen Erfordernisse in seinem Aufbau möglichst klein und betriebssicher zu handhaben ist.

Diese Aufgabe wird bei einem Funktelefon der eingangs beschriebenen Art gemäß der Erfindung gelöst durch einen auf die Längsachse bezogenen dreiteiligen Aufbau mit einem die Hörmuschel aufnehmenden hohlzylindrischen Oberteil, einem in das Oberteil teleskopartig einschiebbaren Mittelteil mit integriertem Tastatur- und Anzeigenfeld und einem am Mittelteil fixierten, die Sprechkapsel aufnehmenden Unterteil.

Vorteilhafte Ausgestaltungen und Weiterbildungen des Erfindungsgegenstandes sind in den Unteransprüchen angegeben.

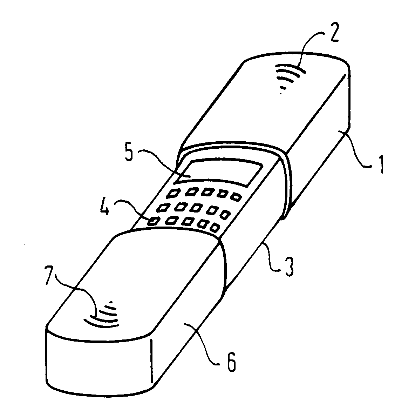

Nachstehend wird die Erfindung anhand eines in der Zeichnung dargestellten Ausführungsbeispiels näher erläutert.

Das Funktelefon besteht, bezogen auf seine Längsachse, äußerlich aus drei Hauptteilen: einem schiebbaren Oberteil 1 mit der Hörmuschel, die unterhalb der in der Figur gezeigten Öffnungen 2 angeordnet ist. Das Oberteil 1 ist hohlzylindrisch ausgebildet und weist einen etwa rechteckförmigen Querschnitt auf. An seiner oberen Stirnseite ist es geschlossen. Der sich daran anschließende Mittelteil 3 des Funktelefons mit integriertem Tastatur- und Anzeigenfeld 4, 5 (ggf. alphanumerisch) ist teleskopartig in das Oberteil 1 einschiebbar. Tastatur-und Anzeigenfeld 4, 5 sind an der Oberseite des Mittelteils 3 angeordnet. Die Tastatur ist sehr flach ausgebildet, wobei die Tasten auch gegenüber der Oberfläche vertieft angeordnet sein können. Dadurch ist ein guter Tastatur- und Displayschutz gegeben. Am Mittelteil 3 fixiert ist das Unterteil 6 mit integrierter Sprechkapsel, die unterhalb der Öffnungen 7 angeordnet ist. Das Unterteil 6 weist die gleichen Außenmaße wie das Oberteil 1 auf. Dadurch ergibt sich im zusammengeschobenen Zustand, in dem das Funktelefon transportiert wird, ein bündiger Übergang von Oberteil zu Unterteil. Zur Befestigung beim Transport beispielsweise in der Jackett-Tasche kann man an der Rückseite des Oberteils 1 einen Clip anbringen.

Zum Telefonieren werden Oberteil und Unterteil auseinandergezogen bzw. per Knopfdruck mit Federkraft auseinandergedrückt und damit das Funktelefon automatisch eingeschaltet. Beim Zusammenschieben erfolgt automatisch eine "stand by"-Schaltung, wenn nicht vorher bewußt auf "Aus" geschaltet wurde. Eine in der Figur nicht dargestellte Antenne kann gegebenenfalls durch das Auseinanderziehen des Gehäuses intern entsprechend verlängert werden. Die Stromversorgung erfolgt durch einen integrierten Akku, der an einer Heimstation, über einen Autoadapter oder ein Ladegerät aufladbar ist.

Durch den erfindungsgemäßen Aufbau erhält man ein Funktelefon, das im zusammengeschobenen Zustand sehr klein und handlich ist, beim Betrieb im auseinandergezogenen Zustand jedoch voll den physiologischen Erfordernissen genügt, d.h. den nötigen Abstand Hörmuschel-Sprechkapsel entsprechend dem Abstand Ohr-Mund aufweist. Die Tastatur ist gut bedienbar und das Display gut erkennbar. Zugleich ist ein guter Schutz der Bedienelemente im unbenutzten Zustand oder in "stand by"-Funktion gegen unbeabsichtigte Betätigung gegeben. Von besonderem Vorteil ist ferner, daß bei dem Funktelefon von schlankem Design beim Zusammenschieben eine automatische Abschaltung mit "stand-by"-Funktion erfolgt. Letztere kann durch "Aus"-Schaltung abgeschaltet werden.

## Patentansprüche

1. Funktelefon mit in den Bedienhörer integrierter Hörmuschel und Sprechkapsel sowie Tastatur- und Anzeigenfeld und eine Antenne,
**gekennzeichnet** durch einen auf die Längsachse bezogenen dreiteiligen Aufbau mit einem die Hörmuschel aufnehmenden hohlzylindrischen Oberteil, einem in das Oberteil teleskopartig einschiebbaren Mittelteil mit integriertem Tastatur- und Anzeigenfeld und einem am Mittelteil fixierten, die Sprechkapsel aufnehmenden Unterteil.

2. Funktelefon nach Anspruch 1,
**dadurch gekennzeichnet,**
daß Oberteil und Unterteil gleiche Außenmaße besitzen.

3. Funktelefon nach Anspruch 1 oder 2,
**dadurch gekennzeichnet,**
daß die Tastatur am Mittelteil sehr flach ausgebildet ist.

4. Funktelefon nach Anspruch 1 oder 2,
**dadurch gekennzeichnet,**
daß die Tasten des Tastaturfeldes gegenüber der Oberfläche vertieft angeordnet sind.

5. Funktelefon nach einem der Ansprüche 1 bis 4,
**dadurch gekennzeichnet,**
daß das Oberteil mit einem Befestigungsclip versehen ist.

6. Funktelefon nach einem der Ansprüche 1 bis 5,
**dadurch gekennzeichnet,**
daß beim Auseinanderziehen des Gehäuses das Telefon automatisch eingeschaltet wird.

7. Funktelefon nach einem der vorhergehenden Ansprüche,
**dadurch gekennzeichnet,**
daß die Antenne beim Auseinanderziehen des Gehäuses intern entsprechend verlängert wird.
